# EUROPEAN PATENT APPLICATION

(11) **EP 2 325 480 A1**
(43) Date of publication of application: **25.05.2011**
(21) Application number: 09014630.9
(22) Date of filing: 24.11.2009
(51) Int. Cl.: F03D 7/04

(54) **Method for controlling the operation of a wind turbine and wind turbine load control system**

(71) Applicant: Siemens Aktiengesellschaft, 80333 München (DE)
(72) Inventor: Stiesdal, Henrik, 5000 Odense C (DK)

(57) **Abstract**

It is described a method for controlling the operation of a wind turbine (100) comprising at least one structural component (114, 120, 122). The described method comprises (a) scheduling a fatigue life time consumption of the structural component (114, 120, 122), (b) determining the current velocity of a wind which is driving the wind turbine, (c) specifying a current set point value for the fatigue life time consumption of the structural component based on the scheduled fatigue life time consumption of the structural component (114, 120, 122), (d) specifying a maximum set point value for the fatigue life time consumption of the structural component based on the determined current wind velocity, and (e) operating the wind turbine (100) depending on the specified current set point value and/or on the specified maximum set point value such that a mechanical load acting on the structural component is controlled. It is further described a machine load control system (250), a wind turbine and a computer program, which are adapted for carrying out and/or for controlling the described wind turbine operation control method.

## Description

### Field of invention

The present invention relates to the technical field of operating wind turbines. In particular, the present invention relates to a control method and to machine load control system for controlling the operation of a wind turbine in such a manner that an appropriate fatigue life time consumption of a structural component of the wind turbine can be realized. Further, the present invention relates to a wind turbine and to a computer program, which are adapted for carrying out the above mentioned operation control method.

### Art Background

Rotor blades of wind turbine are exposed to large dynamic mechanical loads in particular when the wind turbine is operated in turbulent wind conditions or in conditions of flow distortion, e.g. high wind shear. Therefore, the rotor blades of wind turbines and the corresponding supporting structures have been dimensioned such as to be able to withstand all the dynamic loads that could occur under all conditions to which the wind turbine is certified. However, in case of extreme wind conditions the wind load on structural components of the wind turbine must be reduced in order to avoid any damage of the wind turbine.

Presently, there a known numerous methods of handling wind turbines at high wind situations. Thereby, the term "handling wind turbines" means operating the wind turbine in such a manner that the various mechanical loads acting on structural components such as for instance rotor blades of the wind turbine are kept within safe limits.

An existing very conservative measure by which the wind load on a wind turbine is reduced in high wind conditions is simply shutting down the wind turbine when the wind speed exceeds one or more threshold values. Thus a wind turbine may be shut down when the wind speed exceeds the value of about 25 m/s for about 10 minutes, when the wind speed exceeds the value of about 28 m/s for about 30 seconds or when the wind speed exceeds the value of about 32 m/s for about 1 second.

WO 97/09531 discloses another measure for limiting mechanical loads acting on a wind turbine. Thereby, when a wind velocity is reached which is in danger of mechanically overloading the wind turbine, the operating speed of the rotor is continuously reduced in dependency of the rise in the wind velocity.

US 7,476,985 B discloses a method of operating a wind turbine wherein the rotor speed and/or the generator power are reduced in response to variables exceeding predetermined values. The variables are one or more of (a) wind direction relative to the horizontal direction of the main shaft of the wind turbine, (b) turbulence of the wind driving the wind turbine, or (c) any other variable sensed by one or more sensors mounted on components of the wind turbine. A level of reduction in power generation of the wind turbine at wind speeds above a certain limit value may be increased for instance due to high turbulences of the wind.

JP 2006 241981 discloses another strategy for an efficient operation control for wind turbines. Thereby, the wind turbine is efficiently operated depending on degrees of fatigue deterioration of the wind turbine in order to take full advantage of fatigue life required for the wind turbine. However, in extreme wind conditions it may still be necessary to completely stop the operation of the wind turbine even when performing the operation strategy disclosed in JP 2006 241981.

There may be a need for providing an efficient and flexible control procedure for the operation of a wind turbine, which, even in case of extreme wind conditions, allows for keeping the wind turbine in operation.

### Summary of the Invention

This need may be met by the subject matter according to the independent claims. Advantageous embodiments of the present invention are described by the dependent claims.

According to a first aspect of the invention there is provided a method for controlling the operation of a wind turbine comprising at least one structural component. The provided method comprises (a) scheduling a fatigue life time consumption of the structural component, (b) determining the current velocity of a wind which is driving the wind turbine, (c) specifying a current set point value for the fatigue life time consumption of the structural component based on the scheduled fatigue life time consumption of the structural component, (d) specifying a maximum set point value for the fatigue life time consumption of the structural component based on the determined current wind velocity, and (e) operating the wind turbine depending on the specified current set point value and/or on the specified maximum set point value such that a mechanical load acting on the structural component is controlled.

The described wind turbine operation control method is based on the idea that an optimized effective set point value for the fatigue life time consumption of the structural component can be used for operating the wind turbine. According to the invention the optimized effective set point value is selected from two possible set point values: (i) A current set point value depending on the accumulated fatigue life time consumption of the structural component and (ii) a maximum set point value depending on the current wind conditions.

In particular by selecting the smaller one of these two set point values it can be ensured that on the one hand an optimum fatigue lifetime for the structural component can be achieved and on the other hand the wind turbine will be operated safely without reaching fatigue levels and/or extreme mechanical loads of its structural component. This may provide the advantage that even in extreme wind conditions it will be no more necessary to stop the operation of the wind turbine and the wind turbine can be stayed connected to a utility grid. Thereby, the efficiency of the power production of the wind turbine can be improved.

The maximum set point value may be understood as an upper limit for the set point value which only applies if certain wind conditions are present. Specifically, the maximum set point value may only be taken into account if the wind speed exceeds a predetermined threshold value for the wind speed.

The determination of the current wind velocity may be realized by a measurement procedure using an appropriate wind sensor and/or with an estimation method based on different operational parameters of the wind turbine such as for instance the current blade pitch angle, the current rotational speed, the current power generation.

The two set points values, i.e. the current set point value and the maximum set point value can be dynamically adapted during the operation of the wind turbine. Thereby, the current set point value may be permanently updated to the fatigue condition of the structural component, which during its previous operation has suffered from a certain amount of fatigue consumption. According to the described operation control method the fatigue life time, which the structural component has accumulated so far, is estimated by repeatedly performing mechanical load measurements. Further, the maximum set point value, which depends on the current wind conditions, may also be dynamically adapted. In response to the dynamic adaptation of the current set point value and the maximum set point value also the operation of the wind turbine will be dynamically adapted or varied during the wind turbine operation.

In this document the terms "fatigue life time consumption" and "accumulated fatigue life time consumption" are related to the generally known term "fatigue life", which according to the American Society for Testing and Materials (ASTM) is defined as the number of stress cycles of a specified character that a structural component sustains before a failure of the structural component of a specified nature occurs. In this document the term "fatigue life" is also referred to as "fatigue life time".

Specifically, in this document the term "accumulated fatigue life time consumption" may be the fatigue life time, which the structural component has consumed so far since it has been put into operation. The higher the accumulated fatigue life time consumption is, the higher is the probability that a failure of the structural component will occur in the near future. Therefore, an accumulated fatigue life time consumption is indicative for the aging or deterioration of the structural component due to the mechanical loads which have been acted on the structural component during its previous operation.

Further, in this document the term "fatigue life time consumption" is indicative for the remaining fatigue life time or for the total fatigue life time of the structural component. Thereby, the total fatigue life is the sum of (a) the accumulated fatigue life time consumption and (b) the remaining fatigue life time of the structural component.

The structural component may be any element of the wind turbine, which is subjected to mechanical loads. Preferably, the structural component is an element, which limits the lifetime of the wind turbine and/or which undergoes a comparatively strong deterioration. In this context the set point value for the fatigue life time consumption may be the time (a) when the wind turbine has reached its end of life or (b) when the respective structural component has to be replaced with a new one.

It is mentioned that the described method can also be carried out in connection with two or even more structural components, wherein for each of these structural components the mechanical load is measured, a corresponding accumulated fatigue life time consumption is estimated and an appropriate current set point value for the fatigue life time consumption is specified. For operating the wind turbine all the determined current set points values and the maximum set point value depending on the current wind conditions may be taken into account. However, when specifying the effective set point value preferably the smallest current set point value, i.e. the current set point value which is achieved at the earliest, is taken into account.

The described adaptive operation of the wind turbine can be realized with different measures. However, all measures may have in common that an operational state resulting in a larger power generation will cause more mechanical stress or load to the respective structural component. Therefore, in order to achieve an effective set point value which is timely located in the far future, the wind turbine should be operated in such a manner that a comparatively small amount of power is generated. By contrast thereto, in order to achieve an effective set point value which is timely located very close, the wind turbine can be operated in such a manner that a comparatively large amount of power is generated.

According to an embodiment of the invention scheduling the fatigue life time consumption of the structural component comprises estimating a new accumulated fatigue life time consumption of the structural component based (a) on a previously estimated accumulated fatigue life time consumption of the structural component and (b) on a current mechanical load which is acting on the structural component. Further, the current set point value for the fatigue life time consumption of the structural component is specified based on the estimated new accumulated fatigue life time consumption of the structural component.

The load measurement and the corresponding update procedures for the accumulated fatigue life time consumption of the structural component and/or the wind velocity determination and the corresponding adaptation of the maximum set point value can be accomplished periodically for instance with a repetition rate of 1 Hz. Thereby, a quasi continuous monitoring of the respective parameters and the resulting set point values can be achieved. Of course, the described method can be carried also with other repetition rates or with non periodic accomplished measurement and/or set point value specification procedures.

When using the described wind turbine operation control method it can be ensured that the wind turbine can stay connected to the utility grid even at high wind situations and is not automatically shut down for instance at a wind speed of 25 m/s. As the wind turbine is operated on the effective set point value for a fatigue life time consumption of the structural component it is ensured that the structural component does not reach its fatigue levels for instance due to high alternating loads and/or due to turbulent wind. Even further by specifying the maximum set point value it is ensured that, at high wind situations, the wind turbine is maximally operated at derated mechanical load levels below its fatigue and extreme load limits. By this it is in turn ensured that the wind turbine is operated at load levels that will ensure that the turbine will not break down for instance due to a sudden gust.

According to a further embodiment of the invention the wind turbine is operated in such a manner that an effective set point value for the fatigue life time consumption of the structural component is achieved at least approximately, wherein the effective set point value is the smaller value taken from the maximum set point value and the current set point value.

According to a further embodiment of the invention the specified maximum set point value depends on the current velocity in such a manner that the larger the current velocity is the smaller is the specified maximum set point value. This may mean that the maximum set point value is reduced when the wind velocity increases. Of course, the same might apply vice versa, i.e. the maximum set point value is increased when the wind velocity decreases.

The specified maximum set point value might be reduced with increasing wind velocity only if the wind velocity is above a predetermined or a threshold wind velocity. The predetermined wind velocity may be for instance 25 m/s.

According to a further embodiment of the invention specifying a current set point value for a fatigue life time consumption of the structural component is further based on at least one parameter being relevant for operating the wind turbine in the future. This may provide the advantage that the current set point value and, as a consequence, also the effective set point value for the fatigue life time consumption of the structural component can be specified more precisely. This allows for a further optimized operation of the wind turbine in particular with respect to an efficient fatigue life time consumption of the structural component.

According to a further embodiment of the invention the at least one parameter being relevant for operating the wind turbine in the future is (a) a scheduled fatigue life time consumption of the structural component, (b) a current fatigue life time consumption of the structural component being spent for generating a predefined amount of energy and/or (c) a remaining fatigue life time of the structural component.

The current fatigue life time consumption of the structural component being spent for generating a predefined amount of energy may be for instance the current fatigue life time consumption per kWh being produced by the power generation machine.

The remaining fatigue life time consumption of the structural component may be for instance the fatigue life time of the structural component, wherein, at the time when it has been consumed, a failure of the structural component is expected.

In this respect it is mentioned that also further parameter(s) being relevant for operating the wind turbine in the future can be taken into account for determining an appropriate effective set point value for the fatigue life time consumption of the structural component. Such parameters may be for instance (a) the current price which can be achieved for the generated power (power price), (b) the current interest rate for a credit which has been used for financing the wind turbine and/or (c) the current principal for financing the wind turbine. Of course also other parameters may be taken into account for an appropriate specification of the current set point value and/or of the effective set point value.

With respect to a possible dependency of the operation strategy of the wind turbine from the current power price the following consideration might be taken into account. When the power price is comparatively low it might be advantageous to run the wind turbine in a conservative manner in order to reduce the mechanical loads acting on the structural component. By contrast thereto, if the power price has increased the wind turbine may be operated in a more aggressive manner leading to an enhanced power generation. Similar considerations might be made with respect to possible variations of current interest rate, which has to be paid for investments which might have been necessary for financing the wind turbine.

The wind turbine profit performance may be dynamically optimized based on all known financial parameters, on the condition of the structural component and/or on the current power potential and the current life time consumption.

According to a further embodiment of the invention the method further comprises determining the current mechanical load which is acting on the structural component by a hard sensor.

In this respect a hard sensor may be any measuring instrument being capable of detecting a physical parameter of the structural component during the operation of the wind turbine. The hard sensor may be for instance a force meter, a pressure gauge, a strain gauge such as for instance a tensometer, an acceleration sensor, a proximity gauge, a displacement sensor and/or a temperature sensor. Thereby, a temperature sensor or preferably two temperature sensors may be used to determine thermal fluctuations and/or thermal gradients, which, because of a typical thermal expansion of the material of the structural component, may also cause a stress induced mechanical load on the structural component.

According to a further embodiment of the invention the method further comprises determining the current mechanical load which is acting on the structural component by a soft sensor.

In this respect a soft sensor, which is often also called a virtual sensor, is a common name for software where several measurements are processed together. There may be dozens or even hundreds of measurements. The interaction of the signals being provided by one or more hard sensors can be used for calculating new quantities that need not be measured. Soft sensors may be especially useful in data fusion, where measurements of different characteristics and dynamics are combined.

According to a further embodiment of the invention operating the wind turbine in such a manner that the effective set point value for the fatigue life time consumption of the structural component is achieved at least approximately comprises at least one of the following control measures: (a) reducing the speed of the wind turbine), (b) reducing the power being generated by the wind turbine, (c) changing the blade pitch angle of at least one rotor blade of the wind turbine, (d) changing the yaw angle of a nacelle of the wind turbine.

It is pointed out that the mentioned list of control measures is not exclusive. In order to change the current mechanical load a suitable adaptation of any arbitrary parameter of the wind turbine may be carried out, wherein the parameter adaptation results in a change of the current power generation of the wind turbine.

According to a further aspect of the invention there is provided a machine load control system for controlling the operation of the wind turbine comprising at least one structural component. The provided machine load control system comprises (a) a first receiving unit for receiving a first measurement value being indicative for a current mechanical load which is acting on the structural component, (b) a scheduling unit for scheduling a fatigue life time consumption of the structural component based on the first measurement value, (c) a second receiving unit for receiving a second measurement value being indicative for the current velocity of a wind which is driving the wind turbine, (d) a first specifying unit for specifying a current set point value for the fatigue life time consumption of the structural component based on the scheduled fatigue life time consumption, (e) a second specifying unit for specifying a maximum set point value for the fatigue life time consumption of the structural component based on the second measurement value, and (f) a control unit for operating the wind turbine depending on the specified current set point value and/or on the specified maximum set point value such that a mechanical load acting on the structural component is controlled.

Also the described machine load control system is based on the idea that an optimized effective set point value for the fatigue life time consumption of the structural component can be used for operating the wind turbine. The optimized effective set point value is determined by selecting the smaller value taken from (a) the current set point value depending on the accumulated fatigue life time consumption of the structural component and (b) the maximum set point value depending on the current wind conditions.

By selecting the smaller one of these two set point values it can be ensured that (a) on the one hand an optimum fatigue lifetime for the structural component can be achieved and (b) on the other hand the wind turbine will be operated safely without reaching fatigue levels and/or extreme mechanical loads of its structural component. This may provide the advantage that even in extreme wind conditions it will be no more necessary to stop the operation of the wind turbine and the wind turbine can be stayed connected to a utility grid.

The described machine load control system may provide the advantage that it can be ensured that (a) on the one hand an optimum fatigue lifetime for the structural component can be achieved and (b) on the other hand the wind turbine will be operated safely without reaching fatigue levels and/or extreme mechanical loads of its structural component. This may provide the advantage that even in extreme wind conditions it will be no more necessary to stop the operation of the wind turbine and the wind turbine can be stayed connected to a utility grid.

According to an embodiment of the invention the scheduling unit is adapted for estimating a new accumulated fatigue life time consumption of the structural component based (a) on a previously estimated accumulated fatigue life time consumption of the structural component and (b) on the first measurement value. Further, the first specifying unit is adapted for specifying the current set point value based on the new accumulated fatigue life time consumption.

According to a further embodiment of the invention the machine load control system further comprises a processing unit for determining an effective set point value for the fatigue life time consumption of the structural component, wherein the effective set point value is the smaller value taken from the maximum set point value and the current set point value. Further, the control unit is adapted for operating the wind turbine in such a manner that the effective set point value for the fatigue life time consumption of the structural component is achieved at least approximately.

According to a further aspect of the invention there is provided a wind turbine comprising a machine load control system as described above.

According to an embodiment of the invention the structural component is a force, a stress and/or a pressure receiving element of a wind turbine. The structural component may be for instance a rotor blade, a tower or a nacelle. Further, the structural component may be a part of the rotor of the wind turbine. In particular the structural component may a hub, which represents an anchor point for the rotor blades at the main shaft of the rotor, or a pitch bearing, which is located between a rotor blade and the hub. Further, the structural component may be the main shaft, a main bearing for the main shaft or a bed plate of the main bearing. Furthermore, the structural component may be a yaw bearing of the nacelle. Last but not least the structural component may be the gear box of the wind turbine or the electric generator of the wind turbine which is connected with the gear box.

Generally speaking, by using the above described machine load control system the operation of the wind turbine can be improved in order to realize an optimized fatigue life time consumption of those components of a wind turbine, which usually undergo the strongest mechanical loads/fatigue and which therefore limits the economic life-time or at least the maintenance interval of the wind turbine.

According to a further aspect of the invention there is provided a computer program for controlling the operation of a wind turbine. The computer program, when being executed by a data processor, is adapted for controlling the above described wind turbine operation control method.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a wind turbine according to an embodiment of the present invention.
Figure 2 shows in accordance with an embodiment of the present invention a block diagram of a wind turbine load control system.
Figures 3a and 3b show diagrams illustrating the determination of an effective set point value for the fatigue life time consumption of a structural component of a wind turbine, wherein the effective set point value depends on the ratio between a wind speed dependent maximum set point value and an accumulated fatigue life time dependent current set point value.

### Detailed Description

The illustration in the drawing is schematically. It is noted that in different figures, similar or identical elements are provided with reference signs, which are different from the corresponding reference signs only within the first digit.

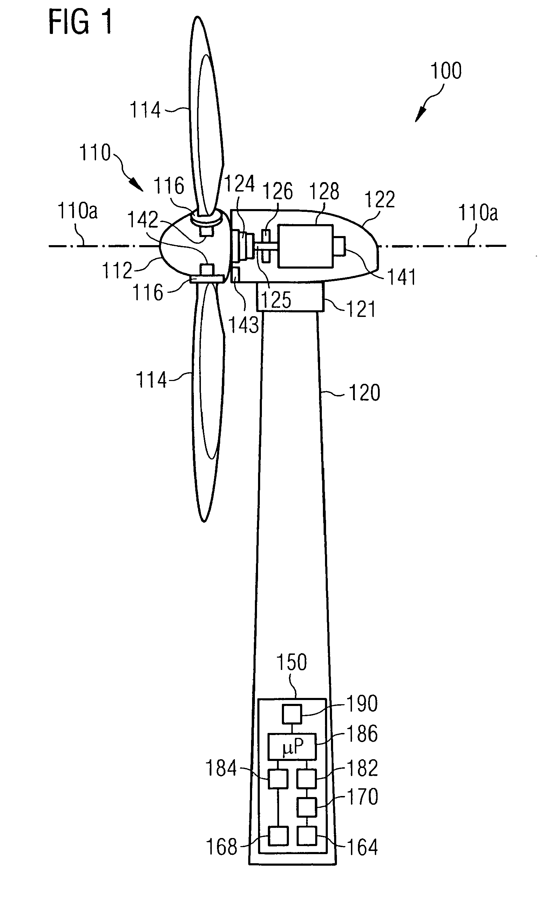

Figure 1 shows a wind turbine 100 according to an embodiment of the invention. The wind turbine 100 comprises a tower 120, which is mounted on a non-depicted fundament. On top of the tower 120 there is arranged a nacelle 122. In between the tower 120 and the nacelle 122 there is provided a yaw angle adjustment device 121, which is capable of rotating the nacelle 122 around a non depicted vertical axis, which is aligned at least approximately parallel with the longitudinal extension of the tower 120. By controlling the yaw angle adjustment device 121 in an appropriate manner it can be made sure, that during a normal operation of the wind turbine 100 the nacelle 122 is always properly aligned with the current wind direction. However, as will be described below in more detail, the yaw angle adjustment device 121 can be used to adjust the yaw angle to a position, wherein the nacelle is intentionally not perfectly aligned with the current wind direction.

The wind turbine 100 further comprises a rotor 110 having three rotor blades 114. In the perspective of Figure 1 only two blades 114 are visible. The rotor 110 is rotatable around a rotational axis 110a. The blades 114, which are mounted at a driving collar 112, extend radial with respect to the rotational axis 110a.

In between the driving collar 112 and a blade 114 there is respectively provided a blade adjustment device 116 in order to adjust the blade pitch angle of each rotor blade 114 by rotating the respective blade 114 around a non depicted axis being aligned parallel with the longitudinal extension of the blade 114. By controlling the blade adjustment device 116 the blade pitch angle of the respective blade 114 can be adjusted in such a manner that at least when the wind speed does not exceed a critical value a maximum wind power can be retrieved from the available wind power. However, as will be described below in more detail, the blade pitch angle can also be intentionally adjusted to a position, in which only a reduced wind power can be captured.

As can be seen from Figure 1, within the nacelle 122 there is provided a gear box 124. The gear box 124 is used to convert the number of revolutions of the rotor 110 into a higher number of revolutions of a shaft 125, which is coupled in a known manner to a generator 128. Further, a brake 126 is provided in order to stop the operation of the wind turbine 100 for instance (a) in case of an emergency, (b) in case of too strong wind conditions, which might harm the wind turbine 100, and/or (c) in case of an intentional saving of structural fatigue life of at least one component of the wind turbine 100.

The wind turbine 100 further comprises a load control system 150 for operating the wind turbine 100 both in a highly efficient and from a fatigue life perspective in a highly reliable and efficient manner. Apart from controlling for instance the yaw angle adjustment device 121 the depicted load control system 150 is also used for adjusting the blade pitch angle of the rotor blades 114 in an optimized manner. Further, as will be described below in more detail, the load control system 150 is used for adjusting the yaw angle of the nacelle 122 respectively of the rotor 110.

For controlling the operation of the wind turbine the load control system 150 is connected to a rotational speed sensor 143, which is connected to the gear box 124. The rotational speed sensor 143 feeds a signal to the control system 150, which is indicative for the current rotational speed of the rotor 110.

Further, the control system 150 is connected in a non depicted manner to a power sensor 141 being connected to the generator 128. The power sensor 141 provides information about the current electrical power production of the wind turbine 110.

Furthermore, the control system 150 is connected to pitch angle sensors 142, which, according to the embodiment described here, are connected to the respective blade adjustment device 116. Therefore, the load control system 150 always has a precise knowledge about the actual blade pitch angle settings of all rotor blades 114.

According to the embodiment described here the load control system 150 is also used for controlling the mechanical load of at least one structural component of the wind turbine. The structural component may be for instance the rotor blade 114, the tower 120 and/or the nacelle 122.

In order to perform a turbine load control in accordance with an embodiment of the invention the load control system 150 comprises (a) a first receiving unit 164 for receiving a first measurement value being indicative for a current mechanical load which is acting on the structural component, (b) an estimating unit 170 for estimating a new accumulated fatigue life time consumption of the structural component based on a previously estimated accumulated fatigue life time consumption of the structural component and on the first measurement value. Furthermore, the load control system 150 comprises (c) a second receiving unit 168 for receiving a second measurement value being indicative for the current velocity of a wind which is driving the wind turbine 100.

The load control system 150 further comprises (d) a first specifying unit 182 for specifying a current set point value for the fatigue life time consumption of the structural component based on the estimated new accumulated fatigue life time consumption and (e) a second specifying unit 184 for specifying a maximum set point value for the fatigue life time consumption of the structural component based on the second measurement value.

Further, the load control system 150 comprises (f) a processing unit 186 for determining an effective set point value for the fatigue life time consumption of the structural component. The processing unit 186 will select as the effective set point value the smaller value taken from the maximum set point value and the current set point value.

Furthermore, the load control system 150 comprises (g) a control unit 190 for operating the wind turbine in such a manner that the selected effective set point value for the fatigue life time consumption of the structural component is achieved at least approximately.

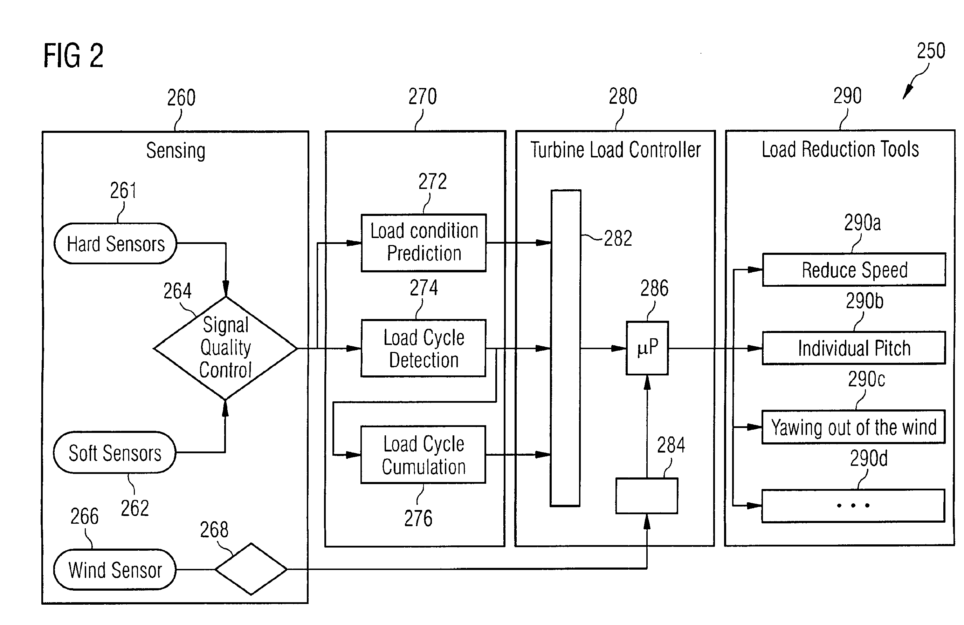

Figure 2 shows in accordance with an embodiment of the present invention a block diagram of a load control system 250 for reducing the mechanical load acting on a structural component such as a rotor blade of the respective wind turbine in such a manner that even in extreme wind conditions the wind turbine can be kept in operation.

As can be seen from Figure 2, the load control system 250 comprises a sensing system 260, an estimating unit 270, a Turbine Load Controller (TLC) 280 and a control unit 290 for executing appropriate mechanical load reduction measures.

The wind turbine load control starts with measuring mechanical loads, which are acting on a structural component of the wind turbine. As has already been mentioned above, the structural component may be a rotor blade, the nacelle or the tower of the respective load controlled wind turbine.

The mechanical load measurement may be accomplished with at least one hard sensor 261 such as for instance a force meter, a pressure gauge, a strain gauge (e.g. a tensometer), an acceleration sensor and/or a temperature sensor. Further, the mechanical load measurement may be accomplished with one or more soft sensors 262. The signal quality of the sensor signal(s) provided from the hard sensor 261 and/or from the soft sensor 262 is checked with a signal quality control unit 264, which in this document is also called a first receiving unit 264. Thereby, measurement artifacts or apparent measuring errors can be filtered out.

The described wind turbine load control further comprises measuring the current wind speed. This is accomplished with a wind sensor 266, which outputs an according measurement signal to a second receiving unit 268. The second receiving unit 268 may also have the capability of performing a signal quality check of the measurement signal provided by the wind sensor 266.

As can be seen from Figure 2, a signal being indicative for the current mechanical load acting on the respective structural component is fed from the first receiving unit 264 to the estimation unit 270. As will be elucidated in the following, the estimating unit 270 performs a sophisticated determination of the fatigue life time which the respective structural component has accumulated so far. Specifically, the estimating unit 270 comprises a load condition prediction unit 272, a load cycle detection unit 274 and a load cycle cumulation unit 276. According to the embodiment described here, the output signal of the first receiving unit 264 is provided both to the load condition prediction unit 272 and to the load cycle detection unit 274.

The load condition prediction unit 272 predicts the mechanical load condition of the respective structural component and feeds a corresponding signal to a first specifying unit 282 of the TLC 280.

The load cycle detection unit 274 detects and evaluates the load cycle which is currently acting on the respective structural component and feeds a corresponding signal both to the first specifying unit 282 and to the above mentioned load cycle cumulation unit 276. An output signal of the load cycle cumulation unit 276, which is indicative for the accumulated fatigue life time consumption of the structural component, is also fed to first specifying unit 282 of the TLC 280.

Based on the three output signals provided (a) by the load condition prediction unit 272, (b) by the load cycle detection unit 274 and (c) by the load cycle cumulation unit 276 the first specifying unit 282 specifies a current set point value for the fatigue life time consumption of the respective structural component.

As can be further seen from Figure 2, the second receiving provides a wind speed signal being indicative for the current wind speed to a second specifying unit 284. The second specifying unit 284 specifies a maximum set point value for the fatigue life time consumption of the structural component based on the signal level of the wind speed signal.

Both the specified current set point value and the specified maximum set point value are fed to a processing unit 286, which determines an effective set point value for the fatigue life time consumption of the structural component. The effective set point value is the smaller value taken from the maximum set point value and the current set point value.

In response to this set point adaptation the wind turbine is operated in such a manner that the real fatigue life time consumption of the structural component approaches the effective set point value at least approximately. In order to achieve this, a control unit 290 selects at least one appropriate load adaptation or load reduction tool.

Possible load reduction tools or load reduction measures are reducing the rotor speed (reference numeral 290a), adapting the individual blade pitch angle (reference numeral 290b) and/or adjusting the yawing angle (reference numeral 290c). It is mentioned that the given list of load reduction tools is not exclusive. In order to reduce the current mechanical load acting on the structural component a suitable adaptation of any arbitrary parameter of the wind turbine may be carried out, wherein the parameter adaptation typically results in a change of the current power generation of the wind turbine. Therefore, reference numeral 290d indicates other not explicitly described load reduction tools.

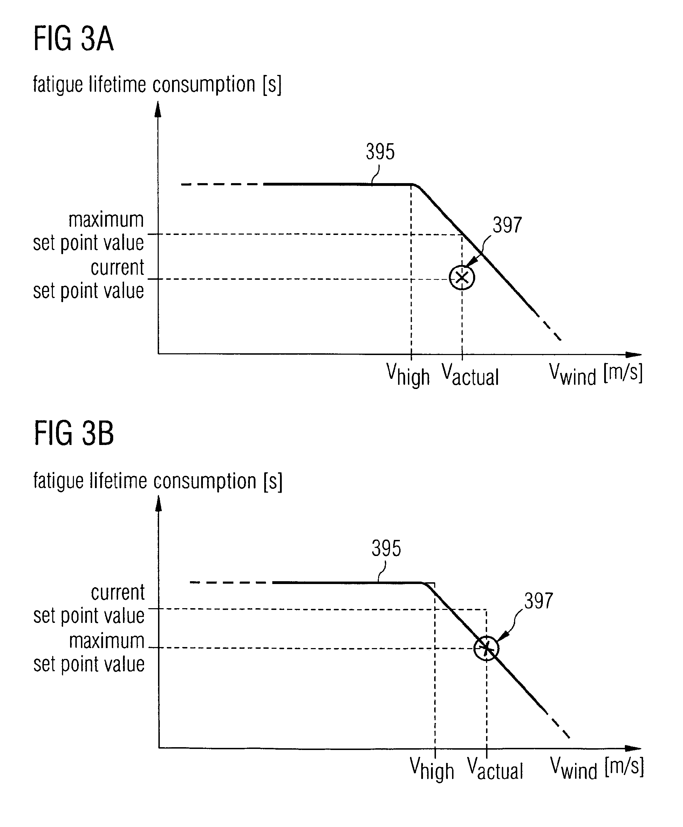

Figures 3a and 3b show diagrams illustrating the determination of an effective set point value for the fatigue life time consumption of a structural component of a wind turbine, wherein the effective set point value depends on the ratio between a wind speed dependent maximum set point value and an accumulated fatigue life time dependent current set point value.

The solid curve 395 shown in Figures 3a and 3b is the maximum set point value for a fatigue life time consumption of the structural component as a function of the wind velocity V_{wind}. Figure 3a illustrates the situation if the wind speed dependent maximum set point value for the fatigue life time consumption of the structural component is larger than the mechanical load dependent current set point value for the fatigue life time consumption of the structural component. Figure 3b illustrates the opposite situation, i.e. the wind speed dependent maximum set point value for the fatigue life time consumption of the structural component is smaller than the mechanical load dependent current set point value for the fatigue life time consumption of the structural component.

In the operational condition illustrated in Figure 3a, during an actual high wind speed situation with a current wind velocity of V_{actual}, which is larger than a predetermined reference wind speed v_{high}, the wind turbine will be operated in such a manner that the specified current set point value for the fatigue life time consumption of the structural component is achieved. Thereby, the specified current set point value is below the specified maximum set point value.

In the operational condition illustrated in Figure 3b, at an actual high wind speed situation with the current wind velocity of V_{actual,} which is also larger than the predetermined reference wind speed v_{high}, the wind turbine will be operated so that the specified maximum set point value for fatigue life time consumption of the structural component is achieved. Thereby, the specified current set point value is above the specified maximum set point value.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A method for controlling the operation of a wind turbine (100) comprising at least one structural component (114, 120, 122), the method comprising
• scheduling a fatigue life time consumption of the structural component (114, 120, 122),
• determining the current velocity (v_{actual}) of a wind which is driving the wind turbine (100),
• specifying a current set point value for the fatigue life time consumption of the structural component (114, 120, 122) based on the scheduled fatigue life time consumption of the structural component (114, 120, 122),
• specifying a maximum set point value for the fatigue life time consumption of the structural component (114, 120, 122) based on the determined current wind velocity (v_{actual}), and
• operating the wind turbine (100) depending on the specified current set point value and/or on the specified maximum set point value such that a mechanical load acting on the structural component is controlled.

2. The method as set forth in the preceding claim,
wherein scheduling the fatigue life time consumption of the structural component (114, 120, 122) comprises estimating a new accumulated fatigue life time consumption of the structural component (114, 120, 122) based
(a) on a previously estimated accumulated fatigue life time consumption of the structural component (114, 120, 122) and
(b) on a current mechanical load which is acting on the structural component (114, 120, 122), and wherein the current set point value for the fatigue life time consumption of the structural component (114, 120, 122) is specified based on the estimated new accumulated fatigue life time consumption of the structural component (114, 120, 122).

3. The method as set forth in any one of the preceding claims, wherein
the wind turbine (100) is operated in such a manner that an effective set point value for the fatigue life time consumption of the structural component (114, 120, 122) is achieved at least approximately, wherein the effective set point value is the smaller value taken from the maximum set point value and the current set point value.

4. The method as set forth in any one of the preceding claims, wherein
the specified maximum set point value depends on the current velocity (v_{actual}) in such a manner that the larger the current velocity (v_{actual}) is the smaller is the specified maximum set point value.

5. The method as set forth in any one of the preceding claims, wherein
specifying a current set point value for a fatigue life time consumption of the structural component (114, 120, 122) is further based on at least one parameter being relevant for operating the wind turbine (100) in the future.

6. The method as set forth in the preceding claim, wherein the at least one parameter being relevant for operating the wind turbine (100) in the future is
- a scheduled fatigue life time consumption of the structural component (114, 120, 122),
- a current fatigue life time consumption of the structural component (114, 120, 122) being spent for generating a predefined amount of energy and/or
- a remaining fatigue life time of the structural component (114, 120, 122).

7. The method as set forth in any one of the preceding claims, further comprising
• determining the current mechanical load which is acting on the structural component (114, 120, 122) by a hard sensor (261).

8. The method as set forth in any one of the preceding claims, further comprising
• determining the current mechanical load which is acting on the structural component (114, 120, 122) by a soft sensor (262).

9. The method as set forth in any one of the preceding claims, wherein
operating the wind turbine (100) in such a manner that the effective set point value for the fatigue life time consumption of the structural component (114, 120, 122) is achieved at least approximately comprises at least one of the following control measures:
- reducing the speed of the wind turbine (100),
- reducing the power being generated by the wind turbine (100),
- changing the blade pitch angle of at least one rotor blade (114) of the wind turbine (100),
- changing the yaw angle of a nacelle (122) of the wind turbine (100).

10. A machine load control system for controlling the operation of the wind turbine (100) comprising at least one structural component (114, 120, 122), the machine load control system (150, 250) comprising
• a first receiving unit (164, 264) for receiving a first measurement value being indicative for a current mechanical load which is acting on the structural component (114, 120, 122),
• a scheduling unit (170, 270) for scheduling a fatigue life time consumption of the structural component (114, 120, 122) based on the first measurement value,
• a second receiving unit (168, 268) for receiving a second measurement value being indicative for the current velocity (v_{actual}) of a wind which is driving the wind turbine (100),
• a first specifying unit (182, 282) for specifying a current set point value for the fatigue life time consumption of the structural component (114, 120, 122) based on the scheduled fatigue life time consumption,
• a second specifying unit (184, 284) for specifying a maximum set point value for the fatigue life time consumption of the structural component (114, 120, 122) based on the second measurement value, and
• a control unit (190, 290) for operating the wind turbine (100) depending on the specified current set point value and/or on the specified maximum set point value such that a mechanical load acting on the structural component is controlled.

11. The machine load control system as set forth in the preceding claim,
wherein the scheduling unit (170, 270) is adapted for estimating a new accumulated fatigue life time consumption of the structural component (114, 120, 122) based
(a) on a previously estimated accumulated fatigue life time consumption of the structural component (114, 120, 122) and
(b) on the first measurement value, and
wherein the first specifying unit (182, 282) is adapted for specifying the current set point value based on the new accumulated fatigue life time consumption.

12. The machine load control system as set forth in the preceding claim, further comprising
• a processing unit (186, 286) for determining an effective set point value for the fatigue life time consumption of the structural component (114, 120, 122), wherein the effective set point value is the smaller value taken from the maximum set point value and the current set point value,
wherein the control unit (190, 290) is adapted for operating the wind turbine (100) in such a manner that the effective set point value for the fatigue life time consumption of the structural component (114, 120, 122) is achieved at least approximately.

13. A wind turbine comprising
• a machine load control system (150, 250) as set forth in any one of the preceding claims 10 to 12.

14. The wind turbine as set forth in the preceding claim, wherein
the structural component (114, 120, 122) is a force, a stress and/or a pressure receiving element of a wind turbine (100).

15. A computer program for controlling the operation of a wind turbine (100), the computer program, when being executed by a data processor, is adapted for controlling the method as set forth in any one of the preceding claims 1 to 9.
